# EUROPEAN PATENT APPLICATION

(11) **EP 1 577 755 A2**
(43) Date of publication of application: **21.09.2005**
(21) Application number: 05003090.7
(22) Date of filing: 14.02.2005
(51) Int. Cl.: G06F 9/44

(54) **Model driven software**

(30) Priority: 16.03.2004 US 553634 P; 15.03.2004 US 553090 P; 15.03.2004 US 553257 P; 15.03.2004 US 553084 P; 01.02.2005 US 48078
(71) Applicant: Ramco Systems Limited, Chennai, Tamilnadu 600 113 (IN)
(72) Inventor: Sundararajan, Parthasarathy, Ashok Nagar Chennai 600 083 (IN); Jayaraman, Shyamala of 'Rajeswari', Chennai 600 014 (IN); Sathiavageeswaran, Suresh of flat No. A1, Kottur Chennai 600 085 (IN); Rajaraman, Madusudanan of Old No. 23, Vyasarnagar Chennai 600 039 (IN); Ramaswamy, Srinivasan of flat B, Ground Floor, Nagar, Nanganallur Chennai 600 061 (IN); Meenakshisundaram, Krishnamoorthy, Abhiramapuram Chennai 600 018 (IN); Devalla, Raghuram, Adambakkam Chennai 600 088 (IN); Gopalsamy, Kannappan, Foreshore Estate Chennai 600 028 (IN)
(74) Representative: Clarke, Alison Clare

(57) **Abstract**

A software model is used to capture and store software system attributes resulting in a repository of system architecture elements. After creation of the model, changes may be proposed to the system, the impact of those changes analyzed using the repository, and a decision made based on the analysis whether to go forward with the proposed changes or take an alternative action.

## Description

### Field of the Invention

The present invention relates to use of models in the software environment, and in particular, as models relate to releases, maintenance, structures, requirements and repositories.

### Background of the Invention

Post implementation maintenance may be the longest and the most time consuming aspect of owning software during its life cycle. While normal system lifecycle continues to shrink (at the present time it is approximately 7 years) due to the speed at which changes occur in business and technology environments, the maintenance phase still extends over the entire lifetime of the system---whatever the length of that lifetime may be. And while maintenance is important, managing changes is not restricted to the post implementation phase in the software lifecycle. A major reason attributed to project schedule slippage and cost overruns is the instability of requirements and changes to these requirements during the development phase. These changes may relate to technological and/or business issues.

During a system lifecycle, handling changes in software is inherently complex. This complexity arises because of the number of individual interacting modules and peripherals in the system, a poor understanding and availability of reliable engineering information about the system, the fact that connection semantics between modules and peripherals are not governed by physical laws, and the myth that software can be changed at will owing to the fact that its nature is non-physical. Irrespective of the complexity, of changes, most issues in software maintenance relate to changes in the business environment and to managing the knowledge needed to change and control the configuration of the artifacts (i.e., executable modules). Complete documentation of the software systems is essential to conduct a proper impact analysis and to understand the effect of changes and the viability of alternatives. Lack of a clear identification of all impacted items leads to a poor estimation of the effort needed to change a system and quite often results in costly system problems.

In the software lifecycle, managing changes brought about by technological evolution is very different from, for example, managing changes brought about by software feature upgrades. One reason for this is that the capability to tackle changes in technology environments goes deep into the architectural principles of systems and whether the changes in the technology environment can be successfully mapped across the present implementation of the system.

Consequently, any software system needs a thorough analysis prior to implementation, including implementation of system upgrades. However, identification of the impact of additions, enhancements, changes and/or deletions at an early stage of the project lifecycle is often not done, or it is not done with clarity and standardization. As a result, there is no end to end identification of this impact from the change requirements to the final delivered artifact. In addition to identifying the impact, the ability to address the size and cost of the software, and the time to complete the set of impacted artifacts, is critical, yet not always properly addressed during system changes.

During system change implementations, it should be kept in mind that model based software artifacts may spread over different layers of implementation. Moreover, the control of changes in artifacts and rolling out these changes to the installed sites at the present time is mostly a manual process and can be troublesome.

Currently, the foregoing problems are addressed in conventional manual process approaches (such as quality systems and system documentation) and/or configuration management tool-based approaches to manage changes to the delivered artifacts.

### Summary of the invention

The invention in one form resides in a method of handling software, comprising the steps of: capturing software-system attributes in a model to create a knowledge repository representing software system architecture elements; proposing changes to said software system; and analyzing an impact of said proposed changes using said knowledge repository. In a second form, the invention resides in a software system model comprising: a business architecture node; a technical node; and a technology node; wherein said technology node comprises information relating to Web artifacts, application artifacts, and resource management artifacts; and wherein deliverable artifacts are listed and stored for packaging and installation. In another form, the invention resides in a computer readable medium comprising instructions available thereon for executing instructions comprising: capturing software system attributes in a model, thereby creating a knowledge repository regarding system architecture elements; proposing changes to said software system; and analyzing an impact of said proposed changes using said knowledge repository.

### Brief Description of the Drawings

FIG. 1 illustrates an example of a model browser that can be used in connection with an embodiment of the invention.

FIG. 2 illustrates another example of a model browser that can be used in connection with an embodiment of the invention.

FIG. 3 illustrates an example of an interface reporting the impact status.

FIG. 4 illustrates another example of an interface reporting the impact status.

FIG. 5 illustrates a computer system in which embodiments of the present invention may be implemented.

### Detailed Description of Embodiments

Model based software solutions involve approaches and implementations in which every significant part of software development lifecycles can be modeled as data and persisted throughout a system. In one embodiment of the invention, model based software solutions provide capabilities that enable users to perform various steps in the software development lifecycle. Specifically, persisted data are passed from upstream processes to downstream processes in the operation and maintenance of the software system.

Consequently, an embodiment of the invention uses model strategy for both storage and deployment functions. It demarcates the layers of storage into business architecture nodes/artifacts, technical nodes/artifacts, and technology nodes/artifacts. This allows for defining each of these layers as master data information in artifact packaging.

The model hierarchy at a requirements management stage has information on business processes, functions, components, activities, user interfaces, tasks and business flows. System attributes that need to be available are captured and stored in the model. A traversable user interface prototype, use case report and flash based review form the deliverable at this stage. The next stage of engineering deals with functions and components as its initial basis for work. That stage has information on the detailing of the business flow rules, messages that become errors or information signs, tasks detailed as services, cross component interactions for data updates through integration services, and methods that solve the data flow implemented mostly as stored procedures. An advantage this model has is that the business object or the integrated business object enables ease of unit testing by creation of base schema using the model information of the service/method structures and applying the minor changes to fit the needs.

The technology layer of the model contains details pertaining to Web, application, and resource management artifacts, with the deliverables listed and stored in the database for packaging and installation. Web layer artifacts may be HTML and JavaScript (JS) files. An embodiment that is a Microsoft version could have Dynamically Linked Libraries (DLL's) and Java versions of the deliverable (with additional class files). In addition to the deliverables, i.e. the executable code, generated source code is stored as binary large objects (BLOBs) in the resource management area of the model. This is possible owing to a clear distinction between the customer and the project worked upon, with supporting evidence of the version and "Requirements Change Notice (RCN)" as supporting attributes to store and retrieve the data for use at any point in time. Facilities for minor changes can be recorded for individual artifacts through proper routes. A release manager controls the list of artifacts that can be allocated to work on, thereby easing the confusion that may otherwise arise out of simultaneously working on the same artifact in response to more than one change notice. With reviews and checkpoints in place for each artifact in each of the model based processes, maintenance and support become easier. A question as to what is not there in the model will highlight the information set that this artifact packaging will hold before it is rolled out to any client site.

Releases of software, and in particular maintenance releases, using this model are much easier to implement. One reason for this is that the generated code is syntactically precise. An impact analysis is performed for the artifacts of the model at the different layers, and estimates of these analyses are collected. Then, the releases are scheduled without much effort because most of the engineering changes are template based, and final code generation of the affected areas are based only on the finalized list of impacted artifacts. Test cases are also generated based on the model information with provisions for test data for validation to ensure that a robust and a scalable application is delivered.

A model based infrastructure enables a history of information to be available through proper configuration management. The advantages of model driven releases and implementations are that they have sets of these data as "versions" of information with proper documentation for each set. Security is enforced at each of the artifacts, based on "ownership" and ability for supervisory roles to overrule the same as checkpoints for ease of use in release and delivery. The model driven releases also provide re-usability of existing software artifacts and in turn make the enhancements on already delivered software artifacts easier.

The management of software and/or system changes brought about by maintenance or other reasons is aided by several features of one or more embodiments of the invention. First, the formal representation of the associated software specification structure serves as a structured knowledge base representation scheme. Second, the system in this embodiment has technology independent architectural elements that guide the software specifications. Third, this embodiment has standard processes to operate the software lifecycle.

Therefore, when a business requirement changes (e.g., the addition of a new report or the change of an existing report), an embodiment of the invention analyzes the impact of a proposed software/system solution to the business change against the knowledge repository. First, this embodiment identifies the impacted items (i.e. artifacts) through the connections persisted in the repository. This analysis is conducted until no new additions appear on the list of additional items to change. The list is then subjected to an estimation of the effort required to implement the changes. If the impact is estimated to be too great, a decision may be made to attempt a different alternative. This impact analysis approach provides for a "what if" analysis before committing to a decision.

In cases where the underlying technology or platform changes, rather than the software, the knowledge repository created in terms of fundamental architecture elements lends itself to looking at a proper technology mapping without having to recreate the knowledge base again.

The built in lifecycle processes enable smooth handover between the functions belonging to various phases and ensures that the listed items are the ones that are changed. Eventually, the artifacts delivered as part of the change are correctly associated with repository elements aiding in sophisticated maintenance management.

In one embodiment, engineering entities function together to invoke database stored procedures that are associated with design methods. Each such method stored procedure in turn invokes different stored procedures. Each such stored procedure accesses data through interface views provided by other components or from their own data store. The main power of a model based development environment then is to have a clear traceability of system development and design from the inception of the problem solving phase to the end of the engineering phase where the code gets delivered to the end user. These processes are tightly integrated with the planning and rollout processes.

In one or more embodiments, an integrated model browser is available on a variety of implementations like the Web based model browser or a client/server based model browser. A traversal of such model browsers has multiple entry points, with at least one per process. A user, on selecting a node at a particular point, will have access to all the data required at that level for the node. The user can further drill down into the contents of the node to analyze the next level of information for the node. The user also has a facility to traverse to the related artifact in other processes both upstream and downstream. This provides the user with full control on the information available in the model.

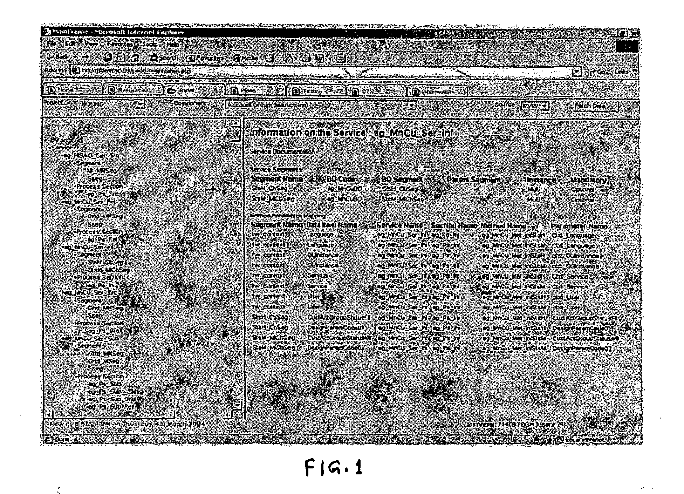

An example related to this embodiment is when a user enters a model browser using the engineering entry point and selects a particular service. The user is provided with all the relevant information for the service. *(See* FIG.1). The user can choose to traverse higher in the process chain by which the user will be presented with a task which invokes this service. The task is the functional counterpart of any service modeled in the system. The user is also provided with information on the methods invoked by the service along with the stored procedures that are invoked by the methods.

A similar capability to browse the entire model through various entry points is present in an embodiment thereby providing the user with the full flexibility of browsing the various elements of the software structure. The user also can view the related information from the planning, control, and rollout processes.

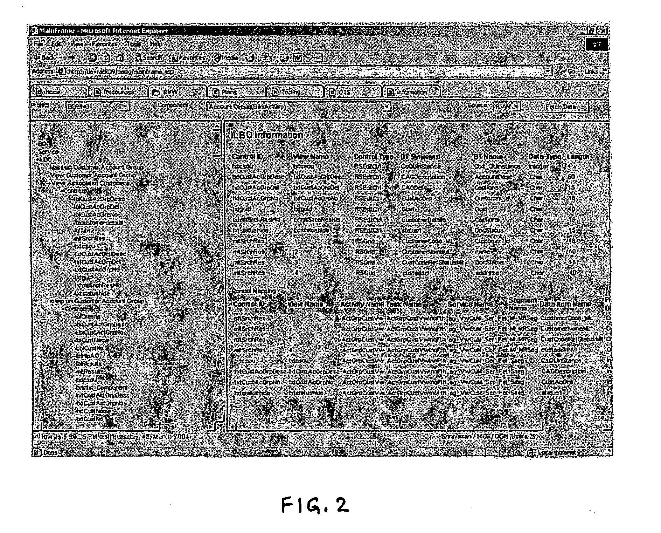

Similarly, when a user chooses to analyze user interface nodes by accessing the model browser, the browser provides information on the various user interface elements present in the screen. *(See* FIG. 2). In addition, it provides information on the flow of data from these user interface elements to the design artifacts (services), thereby ensuring complete visibility on data flow across the business processes. And because of the availability of data in the model, various representations of data can be provided on a variety of platforms.

In another embodiment of the invention, customer requirements are entered into a software system as work requests which form derivable work units. The methodology for capture of these requirements during the problem solving stage is' handled mostly through triggered events and responses to triggered events. A good hierarchy set enables a user to choose to enter, probe, or analyze the existing software, or enhance the provided software using an impact analyzer.

Every customer-request enters a platform through a record request. Specifically, in this embodiment, the requests allow a user to query the existing software, enhance the existing software, examine problems faced in the existing software, and examine requirements for any new project. This is provided at different points of the software development lifecycle. A facility is provided in a running prototype and fully developed software application to enable a user to enter his view points as requests in the context of the user interface. Once a customer request has been taken up for assignment into a project, it transforms with the same identifier as a work request. Users have a facility to provide clarification and/or suggested brief explanation of the solution as solution comments in another activity. This activity also collects attributes such as accepting the requirement analysis, the level at which analysis is likely to begin, the internal user assigned for this request, and whether this request is a new feature to be recorded. The various problem solution levels one can analyze are process, activity, user interface, task and flow business rules. New nodes (process, activity, user interface, and task and flow business rules) at these levels can be added too. Change in functional interaction under a process is depicted in the process flow and similar changes can be carried to activity level and user interface level. Additional points considered in the user interface are screen element changes that could impact the user interface, link interaction that could impact the user interface, and cross impacts on tasks due to impacts from other subsequent processes of the software development lifecycle.

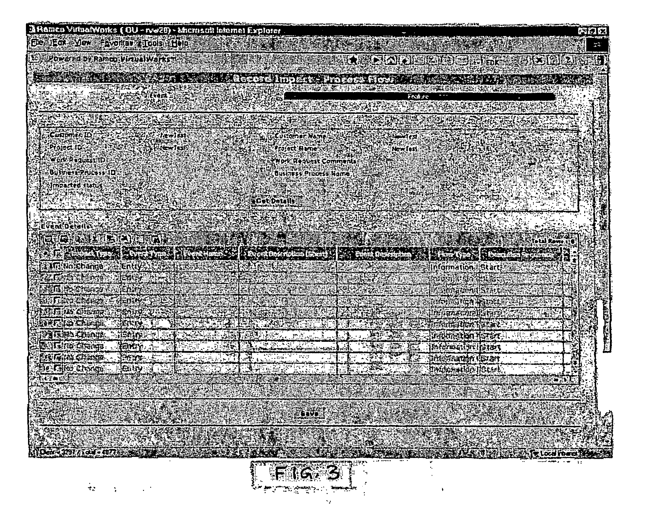

Any change can be identified as flow changes, node changes, additions, and deletions. Initially picked up nodes will be considered in the impacted status "To be analyzed". Once analysis is done the status is changes to "Analyzed". A task button at every node entry point is provided to add the cross impacted nodes to a picked list. This distinction is made available with a column that ensures that only nodes that are not picked up for analysis that form the cross impacted list are added and will have the impact type as "Cross Impacted". Analysis needs to be done as long as the impacted status remains as "Analyzed" for all the nodes in the list under a work request. One more addition to the analysis is the ability to analyze the request for more than one possible solution. Each possible solution can be labeled with different numbers. Each optional solution that is identified is numbered uniquely and analyzed. See FIG. 3.

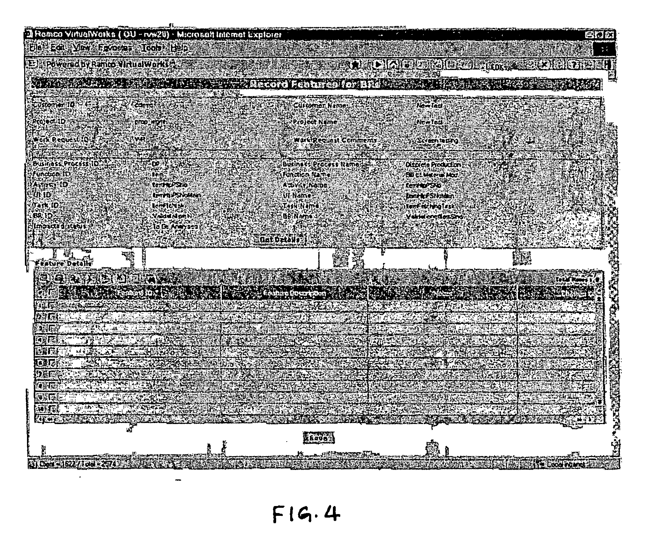

A user may opt to directly suggest the business rule changes for the existing artifacts or add new rules and proceed for completion of the same. Gap analysis reports to exactly depict the list of changes at multiple stages are provided for ease of verification and work follow up. Features that are collected in a work request provided in each level are allowed to be associated with the nodes. A user continues to analyze until he reaches the status of "analyzed" in all levels of the nodes and the user has no more to analyze in his list. Finalize impact analysis is the last activity that completes and updates the status as completion for a work request. Estimation of the analyzed list of changes for a work request can also be provided prior to real work being executed for the same. *See* FIG. 4.

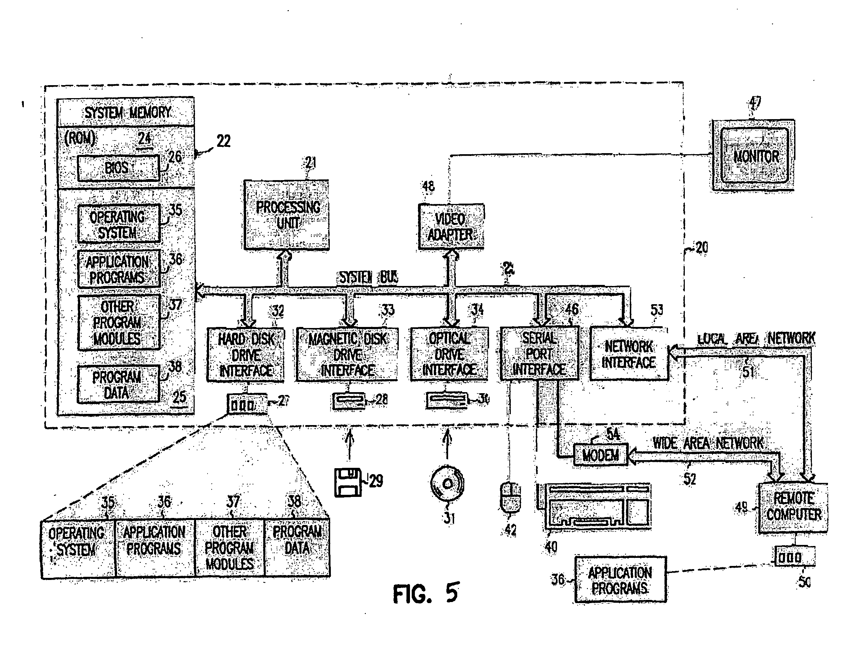

FIG. 5 is an overview diagram of hardware and operating environment in conjunction with which embodiments of the invention may be practiced. The description of FIG. 5 is intended to provide a brief, general description of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types.

Moreover, those skilled in the art will appreciate that the invention may be practiced with other computer system configurations, including hand-held devices, multiprocessor systems, microprocessor-based or programmable consumer electronics, network PCS, minicomputers, mainframe computers, and the like. The invention may also be practiced in distributed computer environments where tasks are performed by I/ 0 remote processing devices that are linked through a communications network. In a distributed computing environment, program modules may be located in both local and remote memory storage devices.

In the embodiment shown in FIG. 5, a hardware and operating environment is provided that is applicable to any of the servers and/or remote clients shown in the other Figures.

As shown in FIG. 5, one embodiment of the hardware and operating environment includes a general purpose computing device in the form of a computer 20 (e.g., a personal computer, workstation, or server), including one or more processing units 21, a system memory 22, and a system bus 23 that operatively couples various system components including the system memory 22 to the processing unit 21. There may be only one or there may be more than one processing unit 21, such that the processor of computer 20 comprises a single central-processing unit (CPU), or a plurality of processing units, commonly referred to as a multiprocessor or parallel-processor environment. In various embodiments, computer 20 is a conventional computer, a distributed computer, or any other type of computer.

The system bus 23 can be any of several types of bus structures including a memory bus or memory controller, a peripheral bus, and a local bus using any of a variety of bus architectures. The system memory can also be referred to as simply the memory, and, in some embodiments, includes read-only memory (ROM) 24 and random-access memory (RAM) 25. A basic input/output system (BIOS) program 26, containing the basic routines that help to transfer information between elements within the computer 20, such as during start-up, may be stored in ROM 24. The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media.

The hard disk drive 27, magnetic disk drive 28, and optical disk drive 30 couple with a hard disk drive interface 32, a magnetic disk drive interface 33, and an optical disk drive interface 34, respectively. The drives and their associated computer-readable media provide non volatile storage of computer-readable instructions, data structures, program modules and other data for the computer 20. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (e.g., RAID storage devices) and the like, can be used in the exemplary operating environment.

A plurality of program modules can be stored on the hard disk, magnetic disk 29, optical disk 31, ROM 24, or RAM 25, including an operating system 35, one or more application programs 36, other program modules 37, and program data 38. A plug in containing a security transmission engine for the present invention can be resident on any one or number of these computer-readable media.

A user may enter commands and information into computer 20 through input devices such as a keyboard 40 and pointing device 42. Other input devices (not shown) can include a microphone, joystick, game pad, satellite dish, scanner, or the like. These other input devices are often connected to the processing unit 21 through a serial port interface 46 that is coupled to the system bus 23, but can be connected by other interfaces, such as a parallel port, game port, or a universal serial bus (USB). A monitor 47 or other type of display device can also be connected to the system bus 23 via an interface, such as a video adapter 48. The monitor 40 can display a graphical user interface for the user. In addition to the monitor 40, computers typically include other peripheral output devices (not shown), such as speakers and printers.

The computer 20 may operate in a networked environment using logical connections to one or more remote computers or servers, such as remote computer 49. These logical connections are achieved by a communication device coupled to or a part of the computer 20; the invention is not limited to a particular type of communications device. The remote computer 49 can be another computer, a server, a router, a network PC, a client, a peer device or other common network node, and typically includes many or all of the elements described above I/0 relative to the computer 20, although only a memory storage device 50 has been illustrated. The logical connections depicted in FIG. 5 include a local area network (LAN) 51 and/or a wide area network (WAN) 52. Such networking environments are commonplace in office networks, enterprise-wide computer networks, intranets and the internet, which are all types of networks.

When used in a LAN-networking environment, the computer 20 is connected to the LAN 51 through a network interface or adapter 53, which is one type of communications device. In some embodiments, when used in a WAN-networking environment, the computer 20 typically includes a modem 54 (another type of communications device) or any other type of communications device, e.g., a wireless transceiver, for establishing communications over the wide-area network 52, such as the internet. The modem 54, which may be internal or external, is connected to the system bus 23 via the serial port interface 46. In a networked environment, program modules depicted relative to the computer 20 can be stored in the remote memory storage device 50 of remote computer, or server 49. It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

In the foregoing detailed description of embodiments of the invention, various features are grouped together in a single embodiment for the purpose of streamlining the disclosure. This method of disclosure is not to be interpreted as reflecting an intention that the claimed embodiments of the invention require more features than are expressly recited in each claim. Rather, as the following claims reflect, inventive subject matter lies in less than all features of a single disclosed embodiment. Thus the following claims are hereby incorporated into the detailed description of embodiments of the invention, with each claim standing on its own as a separate embodiment. It is understood that the above description is intended to be illustrative, and not restrictive. It is intended to cover all alternatives, modifications and equivalents as may be included within the spirit and scope of the invention as defined in the appended claims. Many other embodiments will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein," respectively. Moreover, the terms "first," "second," and "third," etc., are used merely as labels, and are not intended to impose numerical requirements on their objects.

## Claims

1. A method of handling software, comprising:
capturing software system-attributes in a model to create a knowledge repository representing software system architecture elements;
proposing changes to said software system; and
analyzing an impact of said proposed changes using said knowledge repository.

2. The method of claim 1, wherein said model comprises business processes, functions, components, activities, user interfaces, tasks, and business flows, and wherein said attributes are captured through triggered events, and wherein said attributes are customer requirements.

3. The method of claim 1, wherein said knowledge repository comprises a representation of a software specification structure for said software system, and wherein said system comprises technologically independent architectural elements that guide said software specification.

4. The method of claim 1, further comprising identifying impacted items in said software system through connections created in said repository, further comprising conducting said analysis until no new additions appear on a list of items to alter in response to said proposed changes, the method further comprising using said repository to examine proper technology-mapping in response to said proposed changes, and selectively changing said impacted items.

5. The method of claim 4, comprising: generating artifacts of one or more of said impacted items, and associating said artifacts with said repository elements in a maintenance management system, the method further comprising the steps of creating a base schema with said artifacts and said model, and unit testing said artifacts.

6. The method of claim 1, wherein said step of analyzing an impact comprises:
conducting an impact analysis for a software system;
generating a list of artifacts from said impact analysis;
identifying affected areas of said system based upon said impact analysis;
generating final code of said affected areas based on said list of impacted artifacts; and
releasing said artifacts into a software system.

7. The method of claim 6, wherein said impact analysis is performed in different layers of said software system.

8. A software system model comprising:
a business architecture node;
a technical node; and
a technology node;
wherein said technology node comprises information relating to Web artifacts, application artifacts, and resource management artifacts; and
wherein deliverable artifacts are listed and stored for packaging and installation.

9. The software system model of claim 8, further comprising a resource management area, further comprising generated source code, said generated source code being stored in said resource management area of said model, the software system model further comprising a release manager, wherein said release manager manages a work schedule for said artifacts, said system model further comprising checkpoints for said artifacts.

10. A computer readable medium comprising instructions available thereon for executing instructions comprising:
capturing software system attributes in a model, thereby creating a knowledge repository regarding system architecture elements;
proposing changes to said software system; and
conducting analysis of an impact of said proposed changes using said knowledge repository.

11. The computer readable medium of claim 10, wherein said attributes include customer requirements and are captured through triggered events, and wherein said model comprises business processes, functions, components, activities, user interfaces, tasks, and business flows.

12. The computer readable medium of claim 10, wherein said knowledge repository is related to a representation of a software specification structure for said software system,
wherein said software system comprises technology independent architectural elements that guide said software specification, further comprising instructions for identifying impacted items in said software system through connections created in said repository, further comprising instructions for conducting said analysis until no new additions appear on a list of items to alter in response to said changes, further comprising instructions for using said repository to examine proper technology mapping in response to said changes, further comprising instructions for changing said impacted items, further comprising instructions for generating artifacts of one or more of said impacted items, and for associating said artifacts with said repository elements in a maintenance management system, and further comprising instructions for creating a base schema with said artifacts and said model; and unit-testing said artifacts.

13. The computer readable medium of claim 10, wherein the step of conducting an analysis of the proposed changes comprises:
conducting an impact analysis for a software system;
generating a list of artifacts from said impact analysis;
identifying affected areas of said system based upon said impact analysis;
generating final code of said affected areas based on said list of impacted artifacts; and
releasing said artifacts into a software system.
